# EUROPÄISCHE PATENTSCHRIFT

(11) **EP 1 131 747 B1**
(45) Veröffentlichungstag und Bekanntmachung des Hinweises auf die Patenterteilung: **13.03.2013**
(21) Anmeldenummer: 99952214.7
(22) Anmeldetag: 11.11.1999
(51) Int. Cl.: H04W 64/00, G06F 17/30

(54) **VERFAHREN ZUR STANDORTSABHÄNGIGEN INFORMATIONSBESCHAFFUNG AUS DATENBANKEN UND SYSTEM ZUR DURCHFÜHRUNG DES VERFAHRENS**
METHOD FOR THE LOCATION-DEPENDENT RETRIEVAL OF INFORMATION FROM DATABASES AND SYSTEM FOR CARRYING OUT SAID METHOD
PROCEDE POUR L'ACQUISITION D'INFORMATIONS A PARTIR DE BANQUES DE DONNEES, ET SYSTEME POUR LA MISE EN OEUVRE DE CE PROCEDE

(30) Priorität: 16.11.1998 CH 229098
(43) Veröffentlichungstag der Anmeldung: 12.09.2001
(73) Patentinhaber: Swisscom Mobile AG, 3050 Bern (CH)
(72) Erfinder: AESCHLIMANN, Marcel, CH-2514 Ligerz (CH); BALSIGER, Peter, CH-2564 Bellmund (CH); DWORZAK, Christoph, CH-2502 Biel (CH); PRITCHARD, Jane, London W2 5NA (GB); SOLLBERGER, Alexander, CH-2533 Eviland (CH)
(74) Vertreter: Frei, Alexandra Sarah
(86) Internationale Anmeldenummer: PCT/CH1999/000530
(87) Internationale Veröffentlichungsnummer: WO 2000/029979

(56) Entgegenhaltungen:
- WO-A-93/12590
- WO-A-98/02824
- DE-A- 19 524 927
- FUJINO N ET AL: "MOBILE INFORMATION SERVICE BASED ON MULTI-AGENT ARCHITECTURE" IEICE TRANSACTIONS ON COMMUNICATIONS,JP,INSTITUTE OF ELECTRONICS INFORMATION AND COMM. ENG. TOKYO, Bd. E80-B, Nr. 10, 1. Oktober 1997 (1997-10-01), Seiten 1401-1406, XP000734533 ISSN: 0916-8516
- "METHOD FOR USING GLOBAL POSITION SYSTEM TO FIND CLOSE SERVICES" IBM TECHNICAL DISCLOSURE BULLETIN,US,IBM CORP. NEW YORK, Bd. 41, Nr. 1, 1. Januar 1998 (1998-01-01), Seite 693 XP000772259 ISSN: 0018-8689
- LIU G ET AL: "A mobile virtual-distributed system architecture for supporting wireless mobile computing and communications" MOBICOM'95. PROCEEDINGS OF THE FIRST ANNUAL INTERNATIONAL CONFERENCE ON MOBILE COMPUTING AND NETWORKING, PROCEEDINGS OF ACM INTERNATIONAL CONFERENCE ON MOBILE COMPUTING AND NETWORKING 1995, BERKELEY, CA, USA, 13-15 NOV. 1995, Seiten 111-118, XP002133751 1995, New York, NY, USA, ACM, USA ISBN: 0-89791-814-2

## Beschreibung

Die Erfindung betrifft ein Verfahren nach dem Oberbegriff des unabhängigen Patentanspruchs. Das Verfahren dient zur Beschaffung von Informationen aus mindestens einer Datenbank. Ferner betrifft die Erfindung ein System zur Durchführung des Verfahrens nach dem Oberbegriff des entsprechenden, unabhängigen Patentanspruchs.

Als Quellen für aktuelle Informationen dienen beispielsweise Radio, Fernsehen, Teletext, Zeitungen, geographische Karten und Pläne sowie Listen aller Art, aus denen ein Informations-Bezüger aktuelle Informationen gegebenenfalls mit Hilfe von Verzeichnissen sozusagen von Hand sucht und ausgewählt. Aus Datenbanken, auf die mit elektronischen Mitteln zugegriffen werden kann, also beispielsweise von CDs oder auch aus Internet und Intranet können Informationen mit Hilfe von Suchmaschinen bedeutend gezielter beschafft werden. Dabei entstehen aber durch die Fülle der Informationen und durch die Formulierung der Kriterien, nach denen eine Suchmaschine arbeiten soll, neue Probleme, die den Informations-Bezüger vielfach entmutigen oder gar überfordern.

In der Publikation "Mobile Information Service Based on Multi-Agent Architecture" (N. Fujino et al. IEICE Transactions on Communications, JP, Institute of Electronics Information and Comm. Eng. Tokyo, Bd. E80-B, Nr. 10, 1. Oktober 1997), in der Publikation "Method for Using Global Position System to Find Close Services" (IBM Technical disclosure Bulletin, US, IBM Corp. New York, Bd. 41, Nr. 1, 1.Januar 1998, Seite 693) und in der Patentschrift DE-19524927A1 sind Systeme beschrieben, die mobile Benutzergeräte und mit den Benutzergeräten kommunizierende, zentrale Einheiten aufweisen, wobei die zentralen Einheiten an den momentanen Aufenthaltsort eines Benutzergerätes angepasste Information an dieses übermitteln. In der genannten Patentschrift DE-19524927A1 und in der Publikation WO-93/12590 sind ferner Verfahren zur Bestimmung des Standortes eines mobilen Benutzergerätes in einem Mobilfunknetz beschrieben.

WO 99/52316 A1 zeigt ein Kommunikationssystem mit mobilen Stationen. Eine Mobilstation bestimmen, ob sie sich in einem bestimmten Versorgungsgebiet befindet, indem sie einen Identifikator einer Basisstation mit einer Liste von Identifikatoren vergleicht, welche in der Mobilstation gespeichert ist.

WO 89/02824 A1 beschreibt die Lokalisierung eines Benutzergerätes durch ein Kommunikationssystem und die Versorgung des Benutzers mit Information entsprechend der Lokalisierung.

EP 0 744 727 A2 beschreibt ein Lokalisicrungssystem für mobile Geräte, welches Netzidentifikatoren (SID) sowie Identifikatoren ("cell identification numbers") von Funkzellen verwendet. Gemäss einer Ausführungsform kann die Lokalisierung durch ein mobiles Gerät erfolgen, wobei dieses Gerät Karten und Verzeichnisse mit den genannten Identifikatoren aufweist.

WO 97/31437 A1 offenbart die Bestimmung des Ortes von Mobilgeräten durch eine oder mehrere Basisstationen mittels Zeitmessungen und/und Triangulation.

Die Erfindung stellt sich nun die Aufgabe, ein Verfahren zu schaffen, in dem die Informationsbeschaffung aus Datenbanken automatisch gesteuert wird. Ferner stellt sich die Erfindung die Aufgabe, ein System für die Durchführung des Verfahrens zu schaffen.

Diese Aufgabe wird gelöst durch das Verfahren und das System, wie sie in den Patentansprüchen definiert sind.

Im erfindungsgemässen Verfahren wird die Information von einem Standort angefordert und wird die verwendete Suchmaschine anhand von Kriterien, die diesen Standort betreffen, gesteuert. Das heisst mit anderen Worten, die Suchmaschine beschränkt sich auf Informationen, die in einem Zusammenhang mit dem Standort der Informations-Anforderung stehen. Dabei ist eine weitere Steuerung der Suchmaschine durch den Benutzer denkbar aber nicht Voraussetzung. Das erfindungsgemässe System weist Benutzergeräte zur Informations-Anforderung und zum Informationsempfang auf, , Mittel zum Speichern und Aktualisieren von mindestens einer Datenbank und zum Suchen von angeforderter Information in der Datenbank sowie ein Übermittlungsnetz zur Übermittlung der Informations-Anforderung und der angeforderten Information zwischen Datenbank und Benutzergerät. Dabei sind mindestens die mobilen Benutzergeräte zur Bestimmung ihres jeweiligen Standortes ausgerüstet und die mindestens eine Datenbank zum Suchen nach Standorts-Kriterien.

Das erfindungsgemässe Verfahren beruht also auf einer Kombination eines Daten- oder Nachrichten-Übermittlungssystems mit mindestens einer von einem Rechner mit Suchmaschine verwalteten Datenbank. Das Übermittelungssystem weist ein Übermittlungsnetz und eine Vielzahl von insbesondere mobilen, mit dem Übermittlungsnetz kooperierenden Benutzergeräten auf. Das Übermittlungssystem kann auch stationäre Benutzergeräte aufweisen. Die Installationen des Übermittlungsnetzes, insbesondere seine Übermittlungsstationen (Basisstationen) sind im wesentlichen stationär. Für ein gesteuertes Suchen in der mindestens einen Datenbank bestimmt ein mobiles Benutzergerät seinen momentanen Standort im Übermittlungsnetz und übermittelt diesen an das Programm, mit dem Informationen in der Datenbank gesucht werden. Stationäre Benutzergeräte rufen eine entsprechende Standortinformation vorteilhafterweise aus einem Speicher ab.

Die mindestens eine Datenbank enthält Informationen die mit Standorts-Attributen charakterisiert sind, derart, dass sie mit Hilfe der Suchmaschine standortsabhängig auswählbar und/oder organisierbar (sortierbar) sind.

Die Benutzergeräte sind zur Anforderung von Informationen aus der mindestens einen Datenbank und für den Empfang der Informationen ausgerüstet, das heisst sie weisen zusätzlich zu Mitteln zum Übermitteln und Empfangen von Informationen auch Mittel zum Eingeben der Anforderung und Mittel zum Anzeigen der angeforderten Informationen auf, beispielsweise Tastatur und Bildschirm, wie dies vom Gerät "Communicator" der Firma Nokia bekannt ist.

Eine Informations-Anforderung wird vom Benutzergerät durch das Übermittlungsnetz zusammen mit Standort-Daten betr. Benutzergerät an den die Datenbank verwaltenden Rechner übermittelt, wodurch dieser initiiert wird, Informationen anhand der Standort-Daten auszuwählen und/oder zu organisieren und die ausgewählten und/oder organisierten Informationen an das Benutzergerät zu übermitteln.

Ein mobiles Benutzergerät ermittelt seinen momentanen Standort, indem es mindestens eine erreichbare Übermittlungsstation des Netzes kontaktiert, um Information über deren Identität zu empfangen. Dabei werden in dieser Kontaktaufnahme vorteilhafterweise auch Merkmale der Datenübermittlung erfasst und ebenfalls für die Standortbestimmung verwendet. Die aus der Kontaktaufnahme ermittelten, den Standort des Benutzergeräts charakterisierenden Daten werden beispielsweise über einen Servicekanal an den Rechner einer durch den Benutzer angewählten Datenbank übermittelt. Beispielsweise für Fälle, in denen eine Kontaktaufnahme mit Übermittlungsstationen nicht möglich ist oder zu ungenaue Standorts-Merkmale liefert, ist es vorteilhaft, das Benutzergerät derart auszurüsten, dass der Benutzer Standort-Merkmale eingeben oder durch Eingabe präzisieren kann.

Die für die Standortsbestimmung notwendigen Angaben über den Standort und gegebenenfalls auch über Charakteristiken von Übermittlungsstationen des Übermittlungsnetzes können beispielsweise in den Übermittlungsstationen gespeichert sein und bei jeder Kontaktaufnahme an ein Benutzergerät übermittelt werden.

Bei der Kontaktaufnahme werden nur die Identität von Übermittlungsstationen übermittelt, wobei dann das Benutzergerät anhand der übermittelten Identität aus einem entsprechenden Speicher die für die Standortsbestimmung notwendigen Daten beschafft. Dafür kann beispielsweise ein geräteeigener Speicher vorgesehen sein, in dem Standorte und gegebenenfalls weitere Charakteristiken von Übermittlungsstationen für die Gesamtheit des Übermittlungsnetzes permanent gespeichert sind. Dieselben Daten können auch auf einer im Benutzergerät auswechselbar positionierten Karte gespeichert sein, zu der ein Provider für die Aktualisierung der Daten Zugriff hat. Eine derartige Aktualisierung kann beispielsweise in Totzeiten durchgeführt werden. Da ein derartiger Speicher für ein weiträumiges Netz und genaue Angaben sehr gross sein muss und auch immer wieder aktualisiert werden muss, ist es vorteilhafter, die entsprechenden Daten in einem über das Übermittlungsnetz zugänglichen Speicher zu speichern und auf einem aktuellen Stand zu halten und dem Benutzergerät abhängig von seinem momentanen Standort beispielsweise über einen Servicekanal im wesentlichen kontinuierlich zur Verfügung zu stellen.

Das einfachste Verfahren zur Standortbestimmung besteht darin, das Benutzergerät der seinem Standort am nächsten liegenden Übermittlungsstation des Netzes zuzuordnen und seinen Standort als innerhalb des Wirkungskreises dieser Übermittlungsstation zu definieren. In einem heutigen Mobiltelephonnetz haben derartige Wirkungskreise einen Durchmesser von ca. 100m bis 10km, was je nach angeforderter Information für eine entsprechende Informations-Auswahl oder -Organisation bereits genügen kann. Der Standort des Benutzergerätes entspricht in diesem Falle dem Wirkungskreis der Übermittlungsstation und kann als solcher direkt aus den Daten des Übermittlungsnetzes übernommen werden. Zur Erhöhung der Genauigkeit können die Wirkungskreise experimentell ermittelt werden, so dass sie Korrekturen für Signal-Reflexionen etc. bereits enthalten.

Kann das Benutzergerät zwei oder mehr als zwei stationäre Übermittlungsstationen kontaktieren, kann der Standort des Benutzergerätes in derselben Weise bedeutend genauer bestimmt werden als Standort innerhalb des Überlappungsbereiches der Wirkungskreise der Übermittlungsstationen. Daten, die einen derartigen Überlappungsbereich charakterisieren, können entweder (wie die Wirkungskreise der einzelnen Übermittlungsstationen) vom Übermittlungsnetz zur Verfügung gestellt werden oder können im Benutzergerät mit Hilfe eines entsprechenden Algorithmus aus den Daten für die Wirkungskreise der Übermittlungsstationen, mit denen das Benutzergerät Verbindung aufnehmen kann, ermittelt werden.

Genauere Angaben über den Standort des Benutzergerätes sind ermittelbar, wenn nicht nur die Wirkungskreise von Übermittlungsstationen ausgewertet werden, sondern auch die Dauer der Signalübermittlung (Signal-Laufdauer) zwischen Benutzergerät und Übermittlungsstation erfasst und in die Bestimmung des Standortes miteinbezogen wird. Unter Einbezug einer derartigen Distanzmessung über die Signal-Laufdauer in die Standortbestimmung wird der Standort als im wesentlichen auf einer Kreislinie oder auf einem Kreisbogen um eine Übermittlungsstation erfasst, bei Kontakt mit zwei Übermittlungsstationen als Schnittpunkte von zwei Kreislinien oder zwei Kreisbogen.

Kann das Benutzergerät mit drei oder mehr als drei Übermittlungsstationen eines heutigen Mobiltelephonnetzes Kontakt aufnehmen, kann mit Erfassung der Signal-laufdauer und mit Hilfe eines geeigneten Berechnungs-Algorithmus der Standort eines mobilen Gerätes auf ca. 30 m genau bestimmt werden.

Wie für alle tranigulatorischen Bestimmungen wird die Genauigkeit der Standortbestimmung umso höher, je mehr Übermittlungsstationen in die Bestimmung mit einbezogen werden können. Es zeigt sich auch, dass die erreichbare Genauigkeit steigt, wenn für die Standortbestimmung Stationen mit grösseren und mit kleineren Distanzen vom zu bestimmenden Standort (möglichst verschiedene Distanzen) kombiniert werden und wenn diese Stationen in möglichst verschiedenen Richtungen vom zu ermittelnden Standort aus angeordnet sind. Es ist also vorteilhaft, den zur Bestimmung des Standortes verwendeten Algorithmus derart auszurüsten, dass er für Fälle, in denen das Benutzergerät eine Mehrzahl von Übermittlungsstationen kontaktieren kann, für die Standortbestimmungen Übermittlungsstationen auszuwählen, die möglichst verschiedene Richtungen und Distanzen vom zu ermittelnden Standort aus haben.

In derselben Weise wie die Signallaufdauer zwischen Benutzergerät und Übermittlungsstation können auch die Übermittlungsintensität, die ebenfalls die Distanz zwischen Benutzergerät und Übermittlungsstation charakterisiert, und/oder der Peilwinkel erfasst und im Algorithmus für die Standortbestimmung weiterverwendet werden.

Des Weiteren hängt die Genauigkeit der Standortbestimmung von der Genauigkeit der Daten ab, die den Standort der Übermittlungsstationen charakterisieren. Es ist vorteilhaft, diese Daten nicht nur auf geographische Koordinaten zu beschränken, sondern darin auch Übermittlungscharakteristiken wie z.B. Reflexionen miteinzubeziehen.

Es ist auch bekannt, im Empfangsteil eines Mobiltelephones festzustellen, ob eine Verbindung mit einer Übermittlungsstation direkt ist oder auf einer reflektierten Verbindung (Echo) mit einer längeren Laufzeit beruht, und das Resultat der Feststellung zur Empfangsverbesserung zu verwenden. Auch derartige Information kann zur Verbesserung der Standort-Bestimmung herangezogen werden, indem sie vom Empfangsteil des Benutzergerätes abgefragt und in einem entsprechenden Algorithmus zusammen mit anderen Daten verarbeitet wird. Je nach Antennenkonstellation kann sich daraus eine Standort-Bestimmung mit einer Genauigkeit bis zu 20 bis 30m ergeben.

Insbesondere für Fälle, in denen die aus dem Übermittlungsnetz zur Verfügung stehenden Daten für die Standortbestimmung (Standorte und Wirkungskreise von Übermittlungsstationen) keine sehr präzise Standortbestimmung erlauben, ist es vorteilhaft, den Algorithmus der Standortbestimmung durch einen Speicher für bereits bestimmte Standorte zusammen mit der entsprechenden Uhrzeit zu erweitern und derart auszubauen, dass für ein sich bewegendes Benutzergerät vorgängig bestimmte Standorte und daraus eruierte Bewegungsvektoren mit in die Standortbestimmung einbezogen werden, mindestens zur Überprüfung der Plausibilität eines neu bestimmten Standortes.

Durch Einbezug von ermittelten Bewegungsvektoren für ein sich bewegendes Benutzergerät wird es auch möglich, die Steuerung der Suchmachine noch gezielter zu gestalten. Durch Abstimmung der Suchmaschinenfunktion auf die Richtung und die Geschwindigkeit des sich bewegenden Benutzergerätes kann die Suche beschränkt werden auf Informationen, die sich auf geographisch vor dem Benutzergerät liegende Lokalitäten beziehen. Durch Vergleich von Bewegungsvektoren mit geographischen Informationen (z.B. Verlauf von Autobahnen oder Bahnlinien) kann die Suche auch auf entsprechend interessierende Informationen (für Autofahrer oder Bahnfahrer) beschränkt werden.

Zur weiteren spezifischen Ausrichtung der Suchfunktion ist es auch vorteilhaft, zusätzlich Erfahrungswerte betr. vom Benutzer erstellten Suchkriterien zu speichern, insbesondere Daten von früheren Informations-Anforderungen etc.

Ein Algorithmus zur Standortbestimmung anhand von beschafften und erfassten Daten ist im Benutzergerät installiert. Dieser Algorithmus erzeugt Daten, die den Standort charakterisieren und die, beispielsweise via Servicekanal an den die Datenbank verwaltenden Rechner übermittelt werden und von der Suchmaschine vorteilhafterweise direkt als Suchkriterien benutzt werden können.

Das Übermittlungssystem ist beispielsweise ein UMTS-Mobilfunknetz (Universal Mobile Telecommunications System) oder ein GSM-Funknetz mit entsprechenden mobilen Benutzergeräten. In der Publikation WO-93/12590 wird ein Verfahren beschrieben, mit dem aus der Signallaufzeit und den komplexen Gewichten die Position eines mobilen Gerätes innerhalb einer Netzzelle ermittelbar ist. Die Publikation DE-19524927 befasst sich mit der Zielführung innerhalb eines UMTS-Netzes, die ebenfalls mit dem Standort eines Netz-Teilnehmers arbeitet. Beide der genannten Publikationen können also Methoden zur Standort-Bestimmung für ein mobiles Gerät in einem Übermittlungsnetz liefern, welche Standort-Bestimmung als Bestandteil des erfindungsgemässen Verfahrens verwendet werden kann. Es ist auch bekannt, Echoeffekte auszuwerten und damit aus Signal-Laufzeiten bestimmte Distanzen für Reflexionen zu korrigieren, wodurch auf erfassten Signal-Laufzeiten basierende Standortbestimmungen verbessert werden können.

Die Kommunikation zwischen einem Benutzer (via Benutzergerät) und dem Datenbank-verwaltenden Rechner bzw. der Suchmaschine kann automatisiert sein, das heisst derart ausgelegt, dass der Benutzer automatisch mit seinem Standort entsprechenden Informationen versorgt wird.

Die Kommunikation zwischen dem Benutzer (via Benutzergerät) und dem Datenbank-verwaltendem Rechner bzw. der Suchmaschine kann auch interaktiv sein, das heisst derart ausgelegt, dass der Benutzer Informationen von einer spezifischen Datenbank aktiv anfordert und gegebenenfalls Kriterien, die die Suchmaschine zusätzlich zu den Standortskriterien anwenden soll, eingeben kann. Der Benutzer kann gegebenenfalls auch Informationen in der Datenbank ablegen, die dann automatisch mit einem Standorts-Attribut, das dem momentanen Standort des entsprechenden Benutzergerätes entspricht, ergänzt wird.

Offensichtlich ist es natürlich auch möglich, die für das erfindungsgmässe Verfahren ausgerüstete Datenbank mit Suchmaschine, in welcher Datenbank die Informationen mit Standort-Attributen versehen sind, durch aktive Eingabe von ausgewählten derartigen Attributen zu durchsuchen. Dabei muss aber auf die exakte Eingabe der Attribute geachtet werden, was gegebenenfalls zu Schwierigkeiten führt. Diese Schwierigkeiten werden gemäss erfindungsgemässem Verfahren, das heisst also unter Verwendung von im Übermittlungssystem automatisch ermittelten Standort-Daten, nicht auftreten können.

Die Datenbanken und Suchmaschinen, die im erfindungsgemässen Verfahren verwendet werden, unterscheiden sich an sich nicht von bekannten Datenbanken und Suchmaschinen und werden aus diesem Grunde hier nicht in mehr Detail beschrieben.

Die in der mindestens einen Datenbank gespeicherten und mit Standorts-Attributen versehenen Informationen können verschiedenster Natur sein, beispielsweise Ausschnitte aus geographischen Katen, Verzeichnisse von Hotels, Parkplätzen, Kinos, Theatern oder Geschäften oder Fahrpläne von Zügen, Trams etc.

Das erfindungsgemässe Verfahren kann bei der individuellen Verkehrs- und Informationslogistik bei Grossanlässen, insbesondere bei grossräumig durchgeführten derartigen Anlässen, eine zentrale Rolle spielen. Wenn ein Besucher eines derartigen Anlasses ein entsprechend ausgerüstetes, mobiles Benutzergerät mitführt, kann er bereits bei der Anfahrt in Abhängigkeit von seiner individuellen Anfahrtsroute (Schiene oder Strasse) Informationen über günstig gelegene, noch nicht besetzte Parkplätze oder "Events" anfordern. Somit kann sich jeder mit Informationen bedienen und dementsprechend seine Anfahrt planen, das heisst, bereits überfüllte Parkplätze, Staus oder ungünstig gelegene Veranstaltungen mit zeitlich knappem Beginn geplant umgehen.

Zu diesem Zwecke mag es vorteilhaft sein, die von einem Benutzer angeforderten Informationen nicht nur nach dem Standort sondern auch nach der aktuellen Uhrzeit zu filtern.

Das erfindungsgemässe Verfahren ist zum Beispiel für Freizeit, Touristik oder für Businessanwendungen verwendbar. Es erzeugt einen neuen Markt für Anbieter von Information überall da, wo entsprechende Übermittlungsnetze vorhanden sind. Selbstverständlich ist es dabei auch möglich, aus für das erfindungsgemässe Verfahren ausgerüsteten Datenbanken Informationen anzufordern von stationären Benutzergeräten aus (z.B. von Internet-fähigen Computern aus), deren Standort beispielsweise aus der benutzten Telephonnummer eruierbar ist.

Das mobile Benutzergerät, das vom Informationsbezüger benutzt wird, weist beispielsweise wie ein Mobiltelephon ein Tastenfeld und ein Display auf, mit deren Hilfe der Informationsbezüger menugesteuert die gewünschte Information auswählt und gegenbenenfalls die Standortskriterien auch näher definieren kann (beispielsweise durch die Wahl einer Bereichsgrösse) und/oder weitere Suchkriterien angibt. Die übermittelten Informationen werden dann auf dem Display visualisiert. Es ist aber auch möglich, das Benutzergerät zur Informations-Anforderung mittels Tastendruck oder zur Informations-Anforderung auf rein akustischem Wege auszurüsten und die angeforderten Informationen in akustischer Form an den Bezüger zu übermitteln.

Es ist auch vorteilhaft, das erfindungsgemässe Verfahren mit weiteren Dienstleistungen zu verbinden, derart, dass anhand der übermittelten Informationen getroffene Auswahlen weitere Aktionen ausgelöst werden, dass also beispielsweise Billets für ausgewählte Verkehrsmittel und Verkehrswege direkt bestellt oder gekauft, Eintrittskarten für ausgewählte Veranstaltungen reserviert oder gekauft oder Hotelzimmer in ausgewählten Hotels reserviert werden können.

Ein weiteres Beispiel zur Anwendung des erfindungsgemässen Verfahrens ist ein Informations-Bezüger, der Zugsabfahrten vom nächst gelegenen Bahnhof einsehen und sich eine Fahrkarte für einen der abfahrenden Züge reservieren will. Dabei ist es vorteilhaft, wenn der Bezüger für den Zugriff auf die Datenbank des Bahnbetriebs, die beispielsweise den ganzen Fahrplan enthält, zusätzlich zum automatisch gelieferten Kriterium seines Standortes weitere Suchkriterien (Ankunft/Abfahrt, Destination) definieren kann und wenn die übermittelte Information auch nach der momentanen Uhrzeit gefiltert wird oder filterbar ist. Die Auswahl eines bestimmten Zuges und die Bestellung der Fahrkarte werden in an sich bekannter Weise durchgeführt und sind nicht Bestandteil des erfindungsgemässen Verfahrens.

Ein weiteres Beispiel ist die Einsicht eines Veranstaltungskalenders einer geographischen Region, wobei die aus der Datenbank gefilterten Informationen derart organisiert werden, dass die Veranstaltungen in der Reihenfölge wachsender Distanzen zwischen den Veranstaltungsorten und dem momentanen Standort des Benutzergerätes aufgelistet (organisiert) werden. Auch in diesem Falle ist ein Zeitfilter vorteilhaft, das zum Zeitpunkt der Informations-Anforderung bereits vergangene oder bereits gestartete Veranstaltungen automatisch ausfiltert.

## Patentansprüche

1. Verfahren zur Beschaffung von Informationen aus mindestens einer von einem Rechner mit Suchmaschine verwalteten Datenbank, wobei von einem mobilen Benutzergerät, das mit im wesentlichen stationären Übermittlungsstationen eines Übermittlungsnetzes kooperiert, eine Informations-Anforderung erstellt wird, wobei die Informations-Anforderung an den Rechner übermittelt wird, wobei der Rechner Informationen aus der Datenbank auswählt und an des Benutzergerät übermittelt, wobei die Informationen in der Datenbank mit Standort-Attributen versehen sind, und wobei für das Auswählen der Informationen Standort-Daten, die den Standort des Benutzergerätes charakterisieren, und Standort-Attribute korreliert werden,
**dadurch gekennzeichnet, dass** von dem Benutzergerät die Informations-Anforderung zusammen mit Standort-Daten, die den Standort des Benutzergerätes charakterisieren, an den Rechner übermittelt wird, dass durch Einbezug von Bewegungsvektoren für ein sich bewegendes Benutzergerät eine Suche mittels der Suchmaschine beschränkt werden auf Informationen, die sich auf geographisch vor dem Benutzergerät licgende Lokalitäten beziehen, und dass es das Benutzergerät ist, das die Standort-Daten aus einem Standort mindestens einer Übermittlungsstation bestimmt, und diesen Standort der Übermittlungsstation aus seinem Kontakt mit mindestens einer Übermittlungsstation des Übermittlungsnetzes generiert oder beschafft, und die Standort-Daten zusammen mit der Informations-Anforderung an den Rechner übermittelt, wozu bei einer Kontaktaufnahme des Benutzergeräts mit Übermittlungsstationen nur die Identität der Übermittlungsstationen übermittelt wird und die Standorte von Übermittlungsstationen des Übermittlungsnetzes in einem Speicher des Benutzergerätes gespeichert sind.

2. Verfahren nach Anspruch, **dadurch gekennzeichnet, dass** die den Standort von Übermittlungsstationen charakterisierenden Daten in Abhängigkeit vom Standort des Benutzergerätes automatisch an das Benutzergerät übermittelt und in einem Speicher des Benutzergerätes abgelegt werden.

3. Verfahren nach einem der Anspruche 1 bis 2, **dadurch gekennzeichnet, dass** die Daten, die den Standort von Übermittlungsstationen charakterisieren, sich auf die geographische Position und den Wirkungskreis der Übermittlungsstationen beziehen.

4. Verfahren nach einem der Ansprüche 1 bis 2, **dadurch gekennzeichnet dass** beim Kontakt zwischen Benutzergerät und Übermittlungsstation Daten bezüglich der Übermittlungscharakteristik erfasst werden und dass diese Daten zusätzlich zu den den Standort von Übermittlungsstationen charakterisierenden Daten zur Generierung der Standort-Daten verwendet werden.

5. Verfahren nach 4, **dadurch gekennzeichnet, dass** die erfassten Daten sich auf die Signallauflänge, die Signalintensität, Reflexionen oder den Peilwinkel beziehen.

6. Verfahren nach einem der Ansprüche 1 bis 5, **dadurch gekennzeichnet, dass** aus einer Mehrzahl von Übermittlungsstationen, die für die Standortbestimmung vom Benutzergerät kontaktiert werden, für die Generierung der Standort-Daten solche selektiert werden, deren Distanz und Richtung zum Benutzergerät möglichst verschieden sind.

7. Verfahren nach einem der Ansprüche 1 bis 6, **dadurch gekennzeichnet, dass** zur Steuerung der Suchmaschine zusätzlich zu den ermittelten Standort-Daten weitere Suchkriterien verwendet werden.

8. Verfahren nach Anspruch 17, **dadurch gekennzeichnet, dass** die zusätzlichen Suchkriterien Verläufe von Autobahnen oder Bahnlinien oder Echoeffekte im Bereich des ermittelten Standortes und/oder die Uhrzeit sind.

9. Verfahren nach einem der Ansprüche 1 bis 8, **dadurch gekennzeichnet, dass** ermittelte Standort-Daten mit der Uhrzeit ihrer Ermittlung gespeichert werden und dass sie als Bewegungvektoren für weitere Standorts-Ermittlungen beigezogen werden.

10. Verfahren nach einem der Ansprüche 1 bis 9, **dadurch gekennzeichnet, dass** für die Steuerung der Suchmaschine zusätzlich zu beschafften oder genierten Standort-Daten am Benutzergerät weitere Suchkriterien eingegeben werden.

11. System zur Informationsbeschaffung, welches System ein Übermittlungsnetz mit einer Mehrzahl von im wesentlichen stationären Übennittlungsstationen, eine Mchrzahl von mit dem Übermitllungsnetz kooperierenden, mobilen Benutzergeräten zur Anforderung und zum Empfang der Information, mindestens eine Datenbank mit Speichermitteln zur Speicherung der Informationen und einem Rechner mit Suchmaschine zur Verwaltung der Datenbank und zur gesteuerten Übermittlung von Informationen an Benutzergeräte, Mittel zur Generierung und Beschaffung von Standort-Daten, die sich auf den Standort von Benutzergeräte beziehen, und Mittel zur Übermittlung von Standort-Daten an den Rechner der Datenbank aufweist, wobei der Rechner und die Datenbank für eine Auswahl von Informationen gemäss Standort-Daten ausgerüstet sind,
**dadurch gekennzeichnet, dass** die Mittel zur Generierung oder Beschaffung von Standort-Daten im Benutzergerät vorgesehen sind und das Benutzergerät für die Bestimmung der Standort-Daten aus einem Standort mindestens einer Obermittlungsstation aus dem Kontakt des Benutzergerätes mit der mindestens einen Übermittlungsstation des Übermittlungsnetzes ausgerüstet ist, wozu bei einer Kontaktaufnahm 2, 3 Ansps.1 nur die Identität der Übermittlungsstationen übermittelt wird und die Standorte von Übermittlungsstationen des Übermittlungsnctzes in einem Speicher des Benutzergerätes gespeichert sind, und dass das Benutzergcrät ferner Mittel aufweist, um die generierten oder beschafften Standort-Daten zusammen mit einer Informations-Anforderung an den Rechner mit Suchmaschine zu übermitteln, und dass durch Einbezug von Bewegungsvektoren für ein sich bewegendes Benutzergerät eine Suche mittels der Suchmaschine beschränkt ist auf Informationen, die sich auf geographisch vor dem Benutzergerät liegende Lokalitäten beziehen.

12. System nach Anspruch 11, **dadurch gekennzeichnet dass** der Übermtdungsnetz & einen Servicekanal zur Übermittlung von Daten zwischen 1Db=iiftlmgsstationen und Benutzergeräten und zwischen Benutzergeräten und externen Speichermitteln aufweist.

13. System nach einem der Ansprüche 11 bis 12, **dadurch gekennzeichnet dass** Mittel zur Erfassung von Daten bezüglich Charakteristik der Übermittlung zwischen dem Benutzergerät und einet Übermitdungsstation vorgesehen sind und dass das Mittel zur Generierung von Standort-Daten für die Generierung von Standort-Daten aus den beschaffen und den erfässten Daten ausgerüstet ist.

14. System nach Anspruch 21: **dadurch gekennzeichnet, dass** die Mittel zur Erfassung von Übermttlungscharakteristiken für die Erfassung von Signallauflängen, Signalinteositäten. Reflexionen und/oder Peilwinkeln ausgerüstet sind.

15. System nach einem der Ansprüche 11 bis 20, **dadurch gekennzeichnet, dass** das Übermittlungsnetz ein UMTS-Netz oder ein GSM-Fuaknetz ist.

## Claims

1. Method for the acquisition of information from at least one database managed by a computer with a search engine, wherein from a mobile user terminal, which cooperates with substantially stationary transmitting stations of a communication network, an information request is established, wherein the information request is transmitted to the computer and wherein the computer selects information from the database and transmits it to the user terminal, wherein the information stored in the database is provided with location attributes, and wherein for selecting the information, location data characterising the location of the user terminal and location attributes are correlated,
**characterized in that** the user terminal transmits the information request together with location data characterising the location of the user terminal to the computer, that by including movement vectors for a moving user terminal a search by means of the search engine is restricted to information related to localities which are geographically ahead of the user terminal, and that it is the user terminal which generates the location data from the location of at least one transmitting station, and generates or acquires this location of the transmitting station from its contact with at least one transmitting station of the communication network, and transmits the location data together with the information request to the computer, wherein when the user terminal contacts the transmitting stations only the identity of the transmitting stations is transmitted and the locations of transmitting stations of the communication network are stored in a memory device of the user terminal.

2. Method in accordance with claim 1, **characterized in that** the data defining the location of transmitting stations is automatically transmitted in dependence of the location of the user terminal to the user terminal and is stored in a memory device of the user terminal.

3. Method according to one of claims 1 to 2, **characterized in that** the data defining the location of transmitting stations, relate to the geographical position and to the coverage area of the transmitting stations.

4. Method in accordance with one of claims 1 to 3, **characterized in that** during the contact between the user terminal and the transmitting stations data relating to the transmission characteristics are recorded and that these data in addition to the data defining the location of the transmitting station are utilized for generating the location data.

5. Method according to claim 4, **characterized in that** the recorded data relate to the signal transmit times, the signal intensity, signal reflections or the radio bearing angle.

6. Method in accordance with one of claims 1 to 5, **characterized in that** for generating the location data the user terminal selects from a plurality of contacted transmitting stations, ones with distances and directions to the user terminal being as different as possible.

7. Method according to one of claims 1 to 6, **characterized in that** for search engine control, in addition to the determined location data further search criteria are employed.

8. Method in accordance with claim 7, **characterized in that** the additional search criteria are trajectories of motorways or railway lines or echo effects in the region of the determined location and/or the time.

9. Method according to one of claims 1 to 8, **characterized in that** determined location data are stored in memory together with the time, at which they were determined, and that they are made use of as movement vectors for further location determinations.

10. Method in accordance with one of claims 1 to 9, **characterized in that** for controlling the search engine, in addition to the acquired or generated location data further search criteria are entered on the user terminal.

11. System for the acquisition of information, which system comprises a communication network with a plurality of substantially stationary transmitting stations, a plurality of user terminals co-operating with the communication network for requesting and receiving information and at least one database with memory devices for storing the information and a computer with a search engine for managing the database and for controlled transmission of information to user terminals, means for generating and acquiring location data relating to the location of user terminals, and means for transmitting the location data to the computer of the database, wherein the computer and the database are equipped for selecting information in accordance with location data,
**characterized in that** the means for generating and acquiring location data are provided in the user terminal, and the user terminal is configured for determining location data, based on the location of at least one transmitting station, from the contact of the user terminal with the at least one transmitting station of the communication network, wherein when the user terminal contacts the transmitting stations only the identity of the transmitting stations is transmitted and the locations of transmitting stations of the communication network are stored in a memory device of the user terminal, and the user terminal further comprises means for transmitting the generated or acquired location data together with an information request to the computer with the search engine, and wherein by including movement vectors for a moving user terminal a search by means of the search engine is restricted to information related to localities which are geographically ahead of the user terminal.

12. System in accordance with claim 11, **characterized in that** the communication network comprises a service channel for transmitting data between transmitting stations and user terminals and external memory devices.

13. System according to one of claims 11 to 12, **characterized in that** means for recording data relating to the transmission characteristics of the transmission between the user terminal and a transmitting station are provided and that the means for generating location data is equipped for generating location data from the acquired and the recorded data.

14. System in accordance with claim 13, **characterized in that** the means for recording transmission characteristics are equipped for recording signal transmit times, signal intensities, signal reflections and/or radio bearing angles.

15. System according to one of the claims 11 to 14, **characterized in that** the communication network is a UMTS - network or a GSM - wireless network.

## Revendications

1. Procédé destiné à l'acquisition d'informations dans au moins une base de données gérée par un calculateur de données d'un moteur de recherche, une demande d'informations étant établie par un terminal mobile d'utilisateur qui coopère avec des postes de transmission essentiellement stationnaires d'un réseau de transmission,
la demande d'informations étant transmise au calculateur,
le calculateur sélectionnant des informations dans la base de données et les transmettant au terminal d'utilisateur,
les informations conservées dans la base de données étant dotées d'attributs de localisation
pour la sélection des informations, des données de localisation qui caractérisent la localisation du terminal d'utilisateur et des attributs de localisation étant corrélés,
**caractérisé en ce que**
la demande d'informations est transmise au calculateur par le terminal d'utilisateur en même temps que des données de localisation qui caractérisent la localisation du terminal d'utilisateur,
**en ce qu'**en tenant compte de vecteurs de déplacement d'un terminal d'utilisateur en déplacement, une recherche à l'aide du moteur de recherche est restreinte aux informations qui concernent des localités situées géographiquement en avant du terminal d'utilisateur,
**en ce que** c'est le terminal d'utilisateur qui détermine les données de localisation à partir de la localisation d'au moins un poste de transmission et qui génère ou acquiert cette localisation du poste de transmission à partir de son contact avec au moins un poste de transmission du réseau de transmission, et qui transmet au calculateur les données de localisation en même temps que la demande d'informations, seule l'identité des postes de transmission étant déterminée lors de l'enregistrement d'un contact du terminal d'utilisateur avec les postes de transmission, la localisation des postes de transmission du réseau de transmission étant conservée dans une mémoire du terminal d'utilisateur.

2. Procédé selon la revendication 1, **caractérisé en ce que** les données qui caractérisent la localisation des postes de transmission sont transmises au terminal d'utilisateur automatiquement en fonction de la localisation du terminal d'utilisateur et sont conservées dans une mémoire du terminal d'utilisateur.

3. Procédé selon l'une des revendications 1 et 2, **caractérisé en ce que** les données qui caractérisent la localisation des postes de transmission concernent la position géographique et la portée d'action des postes de transmission.

4. Procédé selon l'une des revendications 1 à 3, **caractérisé en ce qu'**en cas de contact entre le terminal d'utilisateur et le poste de transmission, les données concernant la caractéristique de transmission sont saisies et **en ce que** ces données sont utilisées en plus des données qui caractérisent la localisation des postes de transmission pour générer les données de localisation.

5. Procédé selon la revendication 4 **caractérisé en ce que** les données saisies concernent la longueur de parcours des signaux, l'intensité des signaux, les réflexions ou les angles de niveau.

6. Procédé selon l'une des revendications 1 à 5, **caractérisé en ce que** parmi les différents postes de transmission contactés par le terminal d'utilisateur pour la localisation, ceux dont la distance et la direction par rapport au terminal d'utilisateur sont les plus différentes possibles sont sélectionnés pour générer les données de localisation.

7. Procédé selon l'une des revendications 1 à 6, **caractérisé en ce que** pour la commande du moteur de recherche, d'autres critères de recherche sont utilisés en plus des données de localisation qui ont été déterminées.

8. Procédé selon la revendication 7, **caractérisé en ce que** les critères de recherches supplémentaires sont la trajectoire des autoroutes ou des chaussées, des effets d'écho dans la zone de la localisation déterminée et/ou l'heure du jour.

9. Procédé selon l'une des revendications 1 à 8, **caractérisé en ce que** les données de localisation qui ont été déterminées sont conservées en mémoire avec l'heure de leur détermination et **en ce qu'**elles sont utilisées comme vecteur de déplacement pour d'autres localisations.

10. Procédé selon l'une des revendications 1 à 9, **caractérisé en ce que** pour la commande du moteur de recherche, d'autres critères de recherche sont introduits en plus des données de localisation acquises ou générées au terminal d'utilisateur.

11. Système d'acquisition d'informations, le système présentant
un réseau de transmission qui présente plusieurs postes de transmission essentiellement stationnaires,
plusieurs terminaux mobiles d'utilisateur qui coopèrent avec le réseau de transmission et qui demandent et reçoivent des informations,
au moins une base de données présentant des moyens de mémoire qui conservent les informations et un calculateur doté d'un moteur de recherche, qui gère la base de données et qui transmet de manière contrôlée des informations aux terminaux d'utilisateur,
des moyens qui génèrent et acquièrent des données de localisation qui concernent la localisation de terminaux d'utilisateur et des moyens qui transmettent les données de localisation au calculateur de la base de données,
le calculateur et la base de données étant équipés pour sélectionner des informations en fonction de données de localisation,
**caractérisé en ce que**
les moyens qui génèrent ou acquièrent des données de localisation sont prévus dans le terminal d'utilisateur,
**en ce que** le terminal d'utilisateur est équipé pour la détermination de données de localisation à partir de la détermination d'au moins un poste de transmission à partir du contact entre le terminal d'utilisateur et le ou les postes de transmission du réseau de transmission, seule l'identité des postes de transmission étant transmise en cas de contact entre le terminal d'utilisateur et des postes de transmission, la localisation des postes de transmission du réseau de transmission étant conservée dans une mémoire du terminal d'utilisateur,
**en ce que** le terminal d'utilisateur présente en outre des moyens qui permettent de transmettre en même temps qu'une demande d'information les données de localisation générées ou acquises au calculateur doté d'un moteur de recherche et
**en ce que** par recours à des vecteurs de déplacement d'un terminal d'utilisateur qui se déplace, une recherche au moyen du moteur de recherche est limitée à des informations qui concernent des localités situées géographiquement en avant du terminal d'utilisateur.

12. Système selon la revendication 11, **caractérisé en ce que** le réseau de transmission présente un canal de service qui transmet des données entre les postes de transmission et les terminaux d'utilisateur ainsi qu'entre les terminaux d'utilisateur et des moyens externes de mémoire.

13. Système selon l'une des revendications 11 et 12, **caractérisé en ce qu'**il présente des moyens de saisie de données concernant la caractéristique de transmission entre le terminal d'utilisateur et un poste de transmission et **en ce que** le moyen qui génère des données de localisation est équipé pour générer des données de localisation à partir de données acquises et de données saisies.

14. Système selon la revendication 13, **caractérisé en ce que** les moyens de saisie des caractéristiques de transmission sont équipés pour saisir la longueur de parcours des signaux, l'intensité des signaux, les réflexions et/ou les angles de niveau.

15. Système selon l'une des revendications 11 à 14, **caractérisé en ce que** le réseau de transmission est un réseau UMTS ou un réseau radio GSM.
